# EUROPEAN PATENT APPLICATION

(11) **EP 4 722 889 A1**
(43) Date of publication of application: **08.04.2026**
(21) Application number: 24780955.1
(22) Date of filing: 17.05.2024
(51) Int. Cl.: G06F 3/16, G03G 21/00, H04N 1/00

(54) **SPEECH OPERATED SYSTEM**

(71) Applicant: KYOCERA Document Solutions Inc., Osaka-shi, Osaka 540-8585 (JP)
(72) Inventor: TAKAHASHI, Minoru, Osaka-shi, Osaka 540-8585 (JP); NAKAJIMA, Kosuke, Osaka-shi, Osaka 540-8585 (JP); KAWANAKA, Kohei, Osaka-shi, Osaka 540-8585 (JP)
(74) Representative: Herrero & Asociados, S.L.
(86) International application number: PCT/JP2024/018325
(87) International publication number: WO 2024/204863

(57) **Abstract**

A speech operation system 10 includes a job details generation apparatus 30 that generates details of a job which is to be executed by an image forming apparatus 50 on the basis of speech data indicating speech received by a smart speaker 20 and a job instruction generation apparatus 40 that generates an instruction of a job which is able to be analyzed by the image forming apparatus 50 on the basis of the details of a job generated by the job details generation apparatus 30. The job instruction generation apparatus 40 is provided inside of the same network 12 as the image forming apparatus 50, and the job details generation apparatus 50 is provided outside of the network 12.

## Description

### [Technical Field]

The present invention relates to a speech operation system that operates an image forming apparatus via a speech receiving device receiving speech input from a user.

### [Background Art]

A speech operation system that operates an image forming apparatus via a smart speaker which is a speech receiving device is known (for example, see Patent Document 1). In the speech operation system described in Patent Document 1, a cloud service device that is connected to an image forming apparatus via a network such as a local area network (LAN) generates an instruction of a job which is able to be analyzed by the image forming apparatus on the basis of speech input to the smart speaker and transmits the generated instruction to the image forming apparatus.

### [Citation List]

### [Patent Document]

[Patent Document 1]
Japanese Unexamined Patent Application Publication No. 2020-087347

### [Summary of Invention]

However, in the speech operation system described in Patent Document 1, since the cloud service device generates an instruction of a job which is able to be analyzed by the image forming apparatus on the basis of speech input to the smart speaker, there is a problem in that the cloud service device provided in the same network as the image forming apparatus needs to have a high processing capacity.

Therefore, an objective of the present invention is to provide a speech operation system that can reduce a processing capacity required for a device provided in the same network as an image forming apparatus.

According to an aspect of the present invention, there is provided a speech operation system including a job details generation apparatus that generates details of a job which is to be executed by an image forming apparatus on the basis of speech data indicating speech received by a speech receiving device and a job instruction generation apparatus that generates an instruction of a job which is able to be analyzed by the image forming apparatus on the basis of the details generated by the job details generation apparatus, wherein the job instruction generation apparatus is provided inside of the same network as the image forming apparatus, and the job details generation apparatus is provided outside of the network.

In the speech operation system according to the aspect of the present invention, the job details generation apparatus may be connected to the job instruction generation apparatus via another network other than the network.

In the speech operation system according to the present invention with this configuration, since the job details generation apparatus which needs to have a high processing capacity to generate details of a job to be performed by an image forming apparatus on the basis of speech data indicating speech received by the speech receiving device is not provided inside of the same network as the image forming apparatus and the job instruction generation apparatus which generates an instruction of a job which is able to be analyzed by the image forming apparatus on the basis of the details of a job generated by the job details generation apparatus is provided inside of the same network as the image forming apparatus, it is possible to reduce a processing capacity required for an apparatus constituting the job instruction generation apparatus provided inside of the same network as the image forming apparatus.

In the speech operation system according to the aspect of the present invention, the job details generation apparatus may convert the speech data to the details using a machine learning model.

In the speech operation system according to the present invention with this configuration, since the job details generation apparatus which needs to have a high processing capacity to convert speech data indicating speech received by the speech receiving device to details of a job using a machine learning model is not provided inside of the same network as the image forming apparatus, it is possible to reduce a processing capacity required for an apparatus provided inside of the same network as the image forming apparatus.

### [Advantageous Effects of Invention]

With the speech operation system according to the present invention, it is possible to reduce a processing capacity required for a device provided in the same network as an image forming apparatus.

### [Brief Description of Drawings]

FIG. 1 is a block diagram of a speech operation system according to an embodiment of the present invention.
FIG. 2 is a block diagram of a job details generation apparatus illustrated in FIG. 1 when the job details generation apparatus is constituted by one computer.
FIG. 3 is a block diagram of a job instruction generation apparatus illustrated in FIG. 1 when the job instruction generation apparatus is constituted by one computer.
FIG. 4 is a block diagram of an image forming apparatus illustrated in FIG. 1 when the image forming apparatus is an MFP.
FIG. 5 is a sequence diagram of operations of the speech operation system illustrated in FIG. 1 when the image forming apparatus is operated using a smart speaker.

### [Description of Embodiments]

Hereinafter, an embodiment of the present invention will be described with reference to the accompanying drawings.

A configuration of a speech operation system according to an embodiment of the present invention will be first described below.

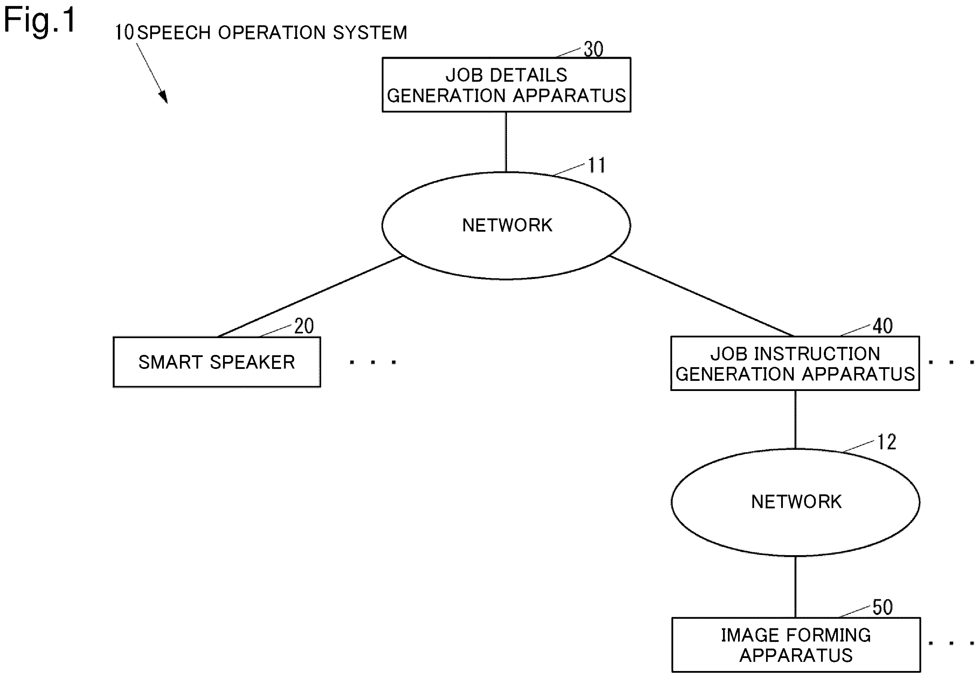

FIG. 1 is a block diagram of the speech operation system 10 according to the present embodiment.

As illustrated in FIG. 1, the speech operation system 10 includes a job details generation apparatus 30 and a job instruction generation apparatus 40. A smart speaker 20 which is a speech receiving device receiving speech input from a user is connected to the speech operation system 10. The speech operation system 10 may include at least one smart speaker having the same configuration as the smart speaker 20 in addition to the smart speaker 20.

The job details generation apparatus 30 generates details of a job (hereinafter referred to as "job details") which is to be performed by an image forming apparatus which will be described later on the basis of speech data indicating speech received by the smart speaker. The job details generation apparatus 30 may be constituted by one computer or constituted by a plurality of computers.

The job instruction generation apparatus 40 generates an instruction for a job (hereinafter referred to as a "job details") which is able to be analyzed by an image forming apparatus which will be described later on the basis of job details generated by the job details generation apparatus 30. The job instruction generation apparatus 40 may be constituted by one computer or may be constituted by a plurality of computers. The speech operation system 10 may include at least one job instruction generation device with the same configuration as the job instruction generation apparatus 40 in addition to the job instruction generation apparatus 40.

For example, an image forming apparatus 50 such as a printer-specific machine or a multifunction peripheral (MFP) is connected to the speech operation system 10. At least one image forming apparatus with the same configuration as the image forming apparatus 50 in addition to the image forming apparatus 50 may be connected to the speech operation system 10.

The smart speaker 20 can communicate with the job details generation apparatus 30, for example, via a network 11 such as the Internet.

In the speech operation system 10, the job details generation apparatus 30 communicates with the job instruction generation apparatus 40, for example, via the network 11 such as the Internet.

The image forming apparatus 50 can communicate with any job instruction generation apparatus in the same network such as a local area network (LAN). For example, the image forming apparatus 50 can communicate with the job instruction generation apparatus 40 in the same network 12. That is, the job instruction generation apparatus 40 is provided inside of the network 12. On the other hand, the job details generation apparatus 30 is connected to the job instruction generation apparatus 40 via the network 11 such as the Internet other than the network 12 and thus is provided outside of the network 12.

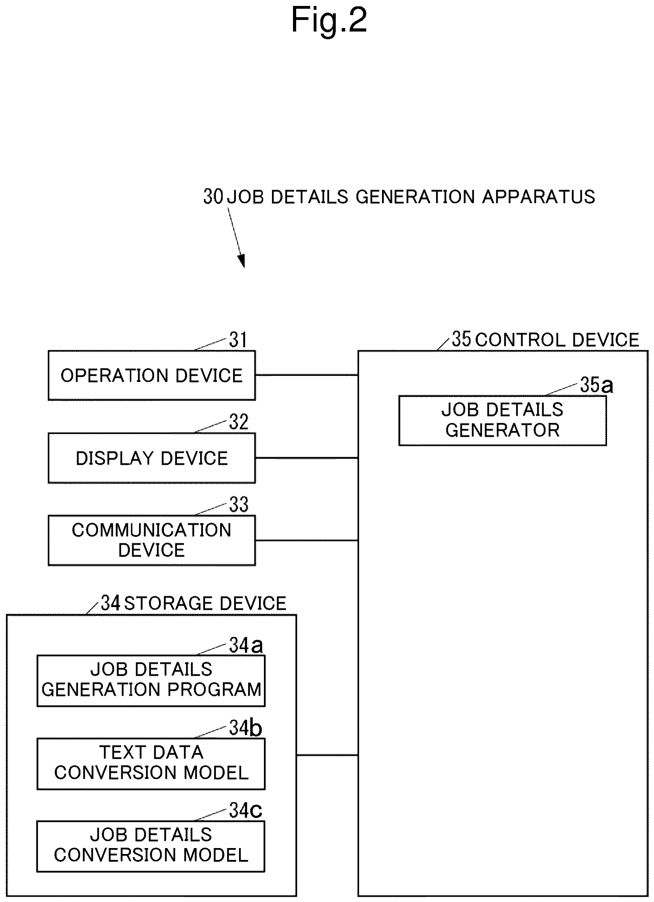

FIG. 2 is a block diagram of the job details generation apparatus 30 when the job details generation apparatus 30 is constituted by one computer.

As illustrated in FIG. 2, the job details generation apparatus 30 includes an operation device 31 which is an operation device such as a keyboard or a mouse to which various operations are input, a display device 32 which is a display device such as a liquid crystal display (LCD) displaying various types of information, a communication device 33 which is a communication device communicating directly with an external device in a wired or wireless manner via a network such as a LAN or the Internet or without using a network, a storage device 34 which is a nonvolatile storage device such as a semiconductor memory or a hard disk drive (HDD) storing various types of information, and a control device 35 which controls the job details generation apparatus 30 as a whole.

The storage device 34 stores a job details generation program 34a for generating job details on the basis of speech data. For example, the job details generation program 34a may be installed in the job details generation apparatus 30 at the time of manufacturing of the job details generation apparatus 30, may be additionally installed in the job details generation apparatus 30 from an external storage medium such as a universal serial bus (USB) memory, or may be additionally installed in the job details generation apparatus 30 from the network.

The storage device 34 stores a text data conversion model 34b which is a machine learning model for converting speech data to text data and a job details conversion model 34c which is a machine learning model for converting text data to job details.

The control device 35 illustrated in FIG. 2 includes, for example, a central processing unit (CPU), a read only memory (ROM) storing programs and various types of data, and a random access memory (RAM) which is a memory used as a work area of the CPU of the control device 35. The CPU of the control device 35 executes programs stored in the storage device 34 or the ROM of the control device 35.

The control device 35 serves as a job details generator 35a that generates job details on the basis of speech data by executing the job details generation program 34a.

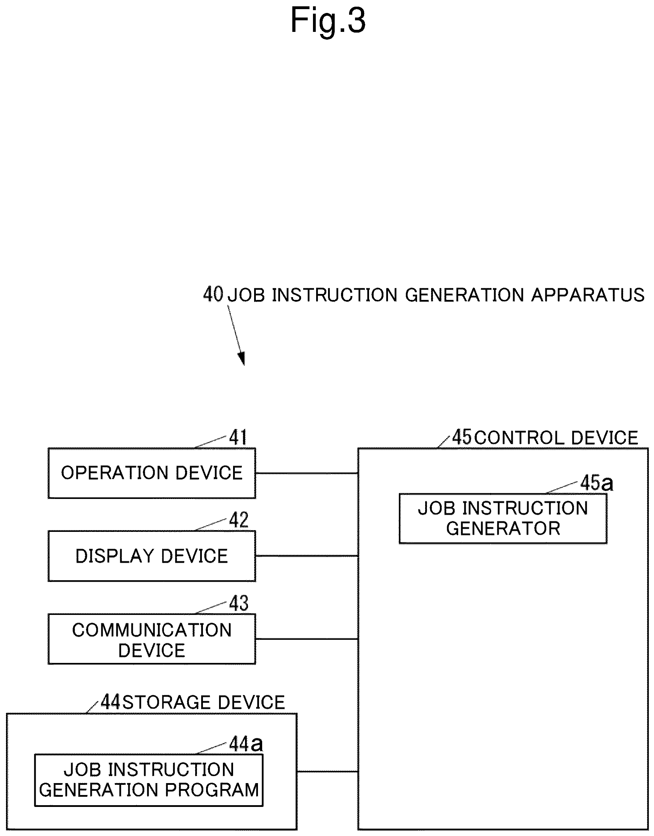

FIG. 3 is block diagram of the job instruction generation apparatus 40 when the job instruction generation apparatus 40 is constituted by one computer.

As illustrated in FIG. 3, the job instruction generation apparatus 40 includes an operation device 41 which is an operation device such as a keyboard or a mouse to which various operations are input, a display device 42 which is a display device such as an LCD displaying various types of information, a communication device 43 which is a communication device communicating directly with an external device in a wired or wireless manner via a network such as a LAN or the Internet or without using a network, a storage device 44 which is a nonvolatile storage device such as a semiconductor memory or an HDD storing various types of information, and a control device 45 which controls the job instruction generation apparatus 40 as a whole.

The storage device 44 stores a job instruction generation program 44a for generating a job instruction on the basis of job details. For example, the job instruction generation program 44a may be installed in the job instruction generation apparatus 40 at the time of manufacturing of the job instruction generation apparatus 40, may be additionally installed in the job instruction generation apparatus 40 from an external storage medium such as a USB memory, or may be additionally installed in the job instruction generation apparatus 40 from the network.

The control device 45 includes, for example, a CPU, a ROM storing programs and various types of data, and a RAM which is a memory used as a work area of the CPU of the control device 45. The CPU of the control device 45 executes programs stored in the storage device 44 or the ROM of the control device 45.

The control device 45 serves as a job instruction generator 45a for generating a job instruction on the basis of job details by executing the job instruction generation program 44a.

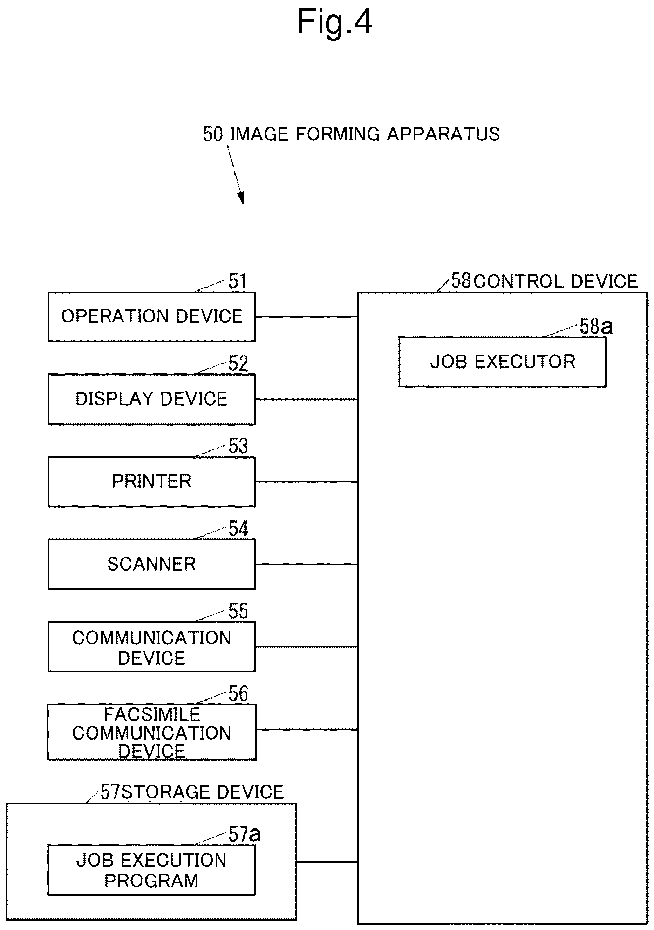

FIG. 4 is a block diagram of the image forming apparatus 50 when the image forming apparatus 50 is an MFP.

As illustrated in FIG. 4, the image forming apparatus 50 includes an operation device 51 which is an operation device such as buttons to which various operations are input, a display device 52 which is a display device such as an LCD displaying various types of information, a printer 53 which is a printing device printing an image on a recording medium such as a sheet, a scanner 54 which is a reading device reading an image from an original, a communication device 55 which is a communication device directly communicating with an external device in a wired or wireless manner via a network such as a LAN or the Internet or without using the network, a facsimile communication device 56 which is a facsimile device performing facsimile communication with an external facsimile device which is not illustrated via a communication line such as a public telephone line, a storage device 57 which is a nonvolatile storage device such as a semiconductor memory or an HDD storing various types of information, and a control device 58 which controls the image forming apparatus 50 as a whole.

The storage device 57 stores a job execution generation program 57a for executing a job. For example, the job execution generation program 57a may be installed in the image forming apparatus 50 at the time of manufacturing of the image forming apparatus 50, may be additionally installed in the image forming apparatus 50 from an external storage medium such as a USB memory, or may be additionally installed in the image forming apparatus 50 from the network.

The control device 58 includes, for example, a CPU, a ROM storing programs and various types of data, and a RAM which is a memory used as a work area of the CPU of the control device 58. The CPU of the control device 58 executes programs stored in the storage device 57 or the ROM of the control device 58.

The control device 58 serves as a job executor 58a for executing a job by executing the job execution generation program 57a.

Operations of the speech operation system 10 when an image forming apparatus is operated via a smart speaker will be described below.

In the following description, it is assumed that the smart speaker receiving a speech operation for operating the image forming apparatus is the smart speaker 20. It is also assumed that an image forming apparatus on which a speech operation received via the smart speaker 20 is to be performed is the image forming apparatus 50.

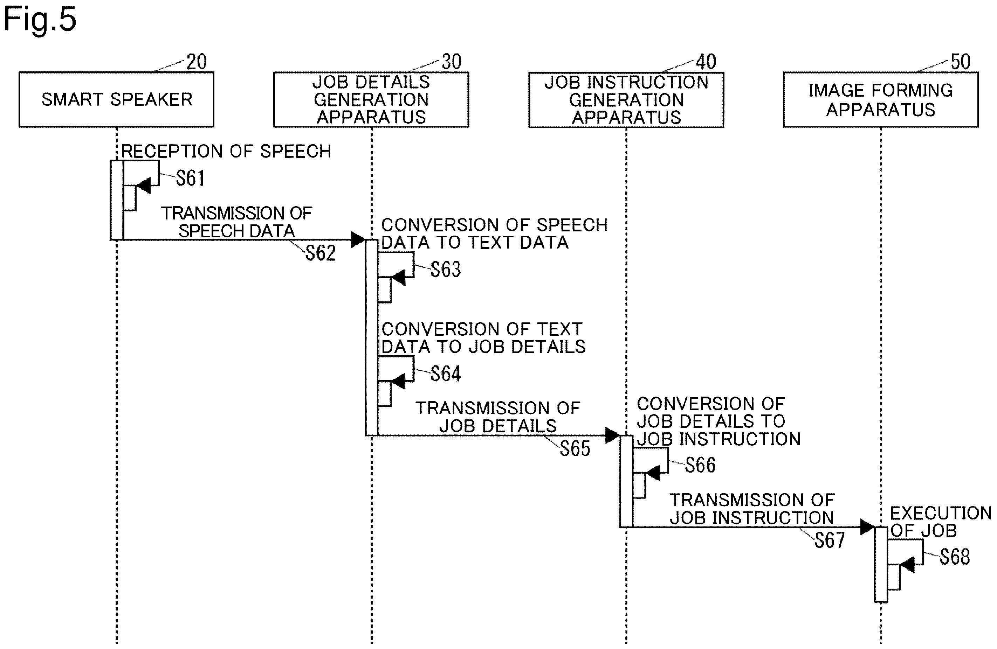

FIG. 5 is a sequence diagram of operations of the speech operation system 10 when the image forming apparatus 50 is operated using the smart speaker 20.

A user inputs speech indicating operation details for the image forming apparatus 50 to the smart speaker 20.

When speech is input, the smart speaker 20 receives speech input to the smart speaker 20 as illustrated in FIG. 5 (S61).

When the process of S61 ends, the smart speaker 20 transmits speech data indicating the speech input in S61 to the job details generation apparatus 30 (S62).

For example, when a user inputs speech of "double-sided copy" to the smart speaker 20, the smart speaker 20 transmits speech data indicating the speech of "double-side copy" to the job details generation apparatus 30 (S62).

When speech data is transmitted from the smart speaker 20 in S62, the job details generator 35a of the job details generation apparatus 30 converts the speech data transmitted from the smart speaker 20 in S62 to text data using the text data conversion model 34b (S63).

When the process of S63 ends, the job details generator 35a converts text data generated in S63 to job details using the job details conversion model 34c (S64).

For example, when speech data indicating speech of "double-side copy" is transmitted from the smart speaker 20 to the job details generation apparatus 30, the job details generator 35a of the job details generation apparatus 30 converts the speech data indicating the speech of "double-side copy" to text data indicating text "double-side copy" (S63) and converts the text data generated in S63 to job details including details of "job type: copy" and "printing surface: double-sided" (S64). Here, "job type: copy" is a set value indicating that a type of a job is copy. "Printing surface: double-sided" is a set value indicating that an image is printed on double sides of a sheet on which an image is printed in a job.

When the process of S64 ends, the job details generator 35a transmits the job details generated in S64 to the job instruction generation apparatus 40 (S65).

The transmission method in S65 is not particularly limited as long as job details can be transmitted from the job details generation apparatus 30 to the job instruction generation apparatus 40. For example, the job details generatior 35a uses a messaging service of a publication-subscription model as the transmission method in S65. In this case, job details are transmitted by publishing a message including the job details. When the messaging service of a publication-subscription model is used as the transmission method in S65, the job instruction generator 45a of the job instruction generation apparatus 40 can receive the job details by subscribing the published message.

When job details are transmitted from the job details generation apparatus 30 in S65, the job instruction generator 45a of the job instruction generation apparatus 40 converts the job details transmitted from the job details generation apparatus 30 in S65 to a job instruction which can be analyzed by the image forming apparatus 50, that is, a job instruction of a format which can be received by an interface provided in the image forming apparatus 50 (S66).

When the process of S66 ends, the job instruction generator 45a transmits the job instruction generated in S66 to the image forming apparatus 50 (S67).

The transmission method in S67 is not particularly limited as long as a job instruction can be transmitted from the job instruction generation apparatus 40 to the image forming apparatus 50. For example, when an interface of a web service format provided in the image forming apparatus 50 is used as the transmission method in S67, the job instruction generator 45a transmits the job instruction by calling the web service. When an interface of a web service format provided in the image forming apparatus 50 is used as the transmission method in S67, the job executor 58a of the image forming apparatus 50 receives the job instruction transmitted in response to calling of the web service.

When a job instruction is transmitted from the job instruction generation apparatus 40 in S67, the job executor 58a of the image forming apparatus 50 executes a job in accordance with the job instruction transmitted from the job instruction generation apparatus 40 in S67 (S68).

As described above, in the speech operation system 10, since the job details generation apparatus 30 which needs to have a high processing capacity to generate job details on the basis of speech data indicating speech received by the smart speaker 20 is not provided inside of the same network 12 as the image forming apparatus 50 and the job instruction generation apparatus 40 which generates a job instruction which is able to be analyzed by the image forming apparatus 50 on the basis of the job details generated by the job details generation apparatus 30 is provided inside of the same network 12 as the image forming apparatus 50, it is possible to reduce a processing capacity required for a computer constituting the job instruction generation apparatus 40 provided inside of the same network 12 as the image forming apparatus 50. That is, according to the aforementioned embodiment, a computer having a processing capacity of a high level which can generate job details on the basis of speech data does not have to be provided in a local area near the image forming apparatus 50.

Since the speech operation system 10 includes the job instruction generation apparatus 40 generating a job instruction which is able to be analyzed by the image forming apparatus 50 inside of the same network 12 as the image forming apparatus 50, the image forming apparatus 50 can be operated via the smart speaker 20 even when the image forming apparatus 50 does not include a structure for receiving a job instruction which is able to be analyzed by the image forming apparatus 50 from the outside of the network 12.

In the speech operation system 10, since the job details generation apparatus 30 which needs to have a high processing capacity to convert speech data indicating speech received by the smart speaker 20 to job details using machine learning models such as the text data conversion model 34b and the job details conversion model 34c is not provided inside of the same network 12 as the image forming apparatus 50, it is possible to reduce a processing capacity required for a computer provided inside of the same network 12 as the image forming apparatus 50.

In the present embodiment, the job details generation apparatus 30 converts speech data transmitted from the smart speaker 20 to text data and then converts the text data to job details. However, the job details generation apparatus 30 may convert speech data transmitted from the smart speaker 20 directly to job details using a machine learning model without converting the speed data to text data.

## Claims

1. A speech operation system comprising:
a job details generation apparatus that generates details of a job which is to be executed by an image forming apparatus on the basis of speech data indicating speech received by a speech receiving device; and
a job instruction generation apparatus that generates an instruction of a job which is able to be analyzed by the image forming apparatus on the basis of the details generated by the job details generation apparatus,
wherein the job instruction generation apparatus is provided inside of the same network as the image forming apparatus, and
wherein the job details generation apparatus is provided outside of the network.

2. The speech operation system according to claim 1, wherein the job details generation apparatus is connected to the job instruction generation apparatus via another network other than the network.

3. The speech operation system according to claim 1, wherein the job details generation apparatus converts the speech data to the details using a machine learning model.
